# EUROPÄISCHE PATENTANMELDUNG

(11) **EP 2 299 394 A1**
(43) Veröffentlichungstag der Anmeldung: **23.03.2011**
(21) Anmeldenummer: 10184847.1
(22) Anmeldetag: 11.10.1999

(54) **Bonusbearbeitungsverfahren**

(30) Priorität: 10.11.1998 DE 19852845
(62) Teilanmeldung aus: 99250359.9
(71) Anmelder: Vodafone Holding GmbH, 40213 Düsseldorf (DE)
(72) Erfinder: Rosenberger, Frank, 40668 Meerbusch-Lank (DE); Drumm, Helge, 45147 Essen (DE)
(74) Vertreter: CBDL Patentanwälte

(57) **Zusammenfassung**

Ein kostengünstiges, ergonomisches, effizientes und dabei die Eigenschaften von Telekommunikationsnetzen berücksichtigendes Bonusbearbeitungssystem ist nur möglich durch eine Vorrichtung und ein Verfahren zum Betreiben eines Bonusbearbeitungssystems eines Telekommunikationsnetzes für Teilnehmer des Telekommunikationsnetzes, insbesondere Mobilfunknetzes,
- wobei bei einem Anruf oder Einwählen eines Teilnehmers bei einer Bonussystem-Neuteilnehmer-Annahmeeinheit des Bonussystems dieser Teilnehmer nach Überprüfung seiner Identität in einer Bonusteilnehmerliste des Bonunserfassungssystems gespeichert wird,
- wobei zumindest für einen Anruf eines Telekommunikationsteilnehmers bei einem anderen Telekommunikaitonsteilnehmer über zumindest dieses Telekommunikationsnetzs das Bonusbearbeitungssystem sofort oder später jeweils überprüft, ob diese anrufende Telekommunikationstelinehmer in der Bonus-Teilnehmer-Liste gespeichert ist und wobei, falls in der Bonusteilnehmerliste gespeichert ist, für seinen Anruf beim anderen Telekommunikationsteilnehmer ein Bonuseintrag in einer Bonusliste des Bonuserfasungssystem abgespeichert wird.

## Beschreibung

Die Erfindung betrifft ein Verfahren zum Betreiben eines Bonusbearbeitungssystems eines Telekommunikationsnetzes für Teilnehmer des Telekommunikationsnetzes, insbesondere Mobilfunknetzes, und eine Vorrichtung zum Durchführen des Verfahrens, insbesondere zum Erfassen und Verwalten von Bonuseinträgen (= Bonuspunkten) für Teilnehmer und zum Ausschütten von Prämien für Bonuseinträge an Teilnehmer.

Mobilfunknetze sind beispielsweise aus der GSM-Standardisierung bekannt. Vergebührungsdaten werden in Mobilfunknetzen auf Einzelanrufbasis in MSCs erstellt und werden teilnehmerbezogen beispielsweise im HLR akkumuliert. Hinsichtlich der Gebührenhöhe ist die Berechnung unterschiedlicher Gebühren zu unterschiedlichen Tageszeiten und Wochentagen in allen Mobilfunknetzen bekannt.

Auf anderen technischen Gebieten wie beispielsweise auf dem Gebiet der Berechnungsverfahren für Bonusse für Vielflieger (Miles and More) ist es bekannt, an Teilnehmer spezielle Karten (wie beispielsweise die Lufthansa Miles and More-Karte) auf Anfrage zu versenden, wobei bei Buchung eines Tickets mit dieser die Teilnehmeridentität umfassenden Karte auf einem Meilenkonto ein Bonus gespeichert wird.

Für Mobilfunksysteme wurden bisher keine effizienten, ergonomischen, die Eigenheit von Mobilfunksystemen berücksichtigenden Bonusbearbeitungsverfahren und Vorrichtungen vorgeschlagen.

Aufgabe der Erfindung ist eine Realisierung eines einfachen, effizienten, ergonomischen und kostengünstigen Bonusbearbeitungsystems für die Kontrolle und Speicherung sowohl von Bonusberechtigten wie auch für die Bearbeitung von Bonuseinträgen für Anrufe dieser Bonusberechtigten. Die Aufgabe wird durch die Gegenstände der unabhängigen Ansprüche gelöst.

Erfindungsgemäß kann sich ein Teilnehmer durch einen Anruf bei einer Bonussystem-Neuteilnehmer-Annahme-Einheit des Bonussystems des Telekommunikationsnetzes unter Angabe seiner Identität in für Telekommunikationsnetze geeigneter Weise einfach und ergonomisch einbuchen. Falls er in einer Potentielle-Teilnehmer-Liste bereits gespeichert ist, wird einerseits ein sehr einfacher Zugang für Neuteilnehmer in das Bonusbearbeitungssystem ermöglicht und andererseits durch den Vergleich der Identität des Neu-Teilnehmers mit Identitäten von in einer Potentielle-Teilnehmer-Liste gespeicherten Teilnehmern einfach und effizient eine hohe Sicherheit hinsichtlich der Zugangsbeschränkung zum Bonusbearbeitungssystem erzielt. In der Potentielle-Teilnehmer-Liste können beispielsweise alle Teilnehmer des Telekommunikationsnetzes (insbesondere des Mobilfunknetzes, welches das Bonusbearbeitungssystem betreibt) gespeichert sein, was sehr einfach und ergonomisch und dabei zuverlässig eine Zugangsbeschränkung gegen unerwünschte Teilnehmer bildet, da beispielsweise bei einem Mobilfunktelekommunikationsnetz die Liste aller Teilnehmer dieses Mobilfunktelekommunikationsnetzes als Potentielle-Teilnehmer-Liste definiert werden kann; in diesem Falle werden also alle Teilnehmer des Mobiltelekommunikationsnetzes (beispielsweise alle Teilnehmer mit einem Vertrag mit Mobilfunktelekommunikationsnetz-Betreiber) als in der Potentielle-Teilnehmer-Liste enthaltene zugangsberechtigt. Wenn ein Teilnehmer (der beispielsweise einen Vertrag mit einem Telekommunikationsnetz-Betreiber hat oder später über dieses Telekommunikationsnetz einen anderen Telekommunikationsteilnehmer anrufen möchte) als Bonus-Teilnehmer in der Bonus-Teilnehmer-Liste gespeichert wurde, wird bei späteren Anrufen dieses Teilnehmers (der jetzt in der Bonus-Teilnehmer-Liste gespeichert ist) bei einem anderen Telekommunikationsteilnehmer über das (das Bonusbearbeitungsystem betreibende) Telekommunikationsnetz nur nach einem positiv verlaufenden Vergleich seiner Identität mit Identitäten in der Bonus-Teilnehmer-Liste jeweils in einer Bonusliste des Bonusbearbeitungssystems ein Bonuseintrag für diesen Telekommunikationsteilnehmer (immer oder zu bestimmten Uhrzeiten und/oder Wochentagen) abgespeichert. Dies kann beispielsweise online oder in beliebigen zyklischen Zeitintervallen in dafür geeigneten Vorrichtungen des Mobilfunknetzes erfolgen; so ist beispielsweise im HLR eine tägliche, wöchentliche etc. Auswertung aller Anrufe eines Telekommunikationsteilnehmers für die Einspeicherung von Bonuseinträgen hierzu in dessen Bonusliste möglich.

Weitere Bonuseinträge (= Bonuspunkte) können vergeben werden für z.B. die Dauer eines Vertrages des Teilnehmers mit den Telekommunikationsnetz-Betreibern, für die Freischaltung eines neuen Services für die Teilnehmer (insbes, auf dessen Anfrage) etc.

Für die Überprüfung der Identität eines als Neu-Teilnehmer bei der Bonussystem-Neuteilnehmer-Erfassungseinheit anrufenden oder sich einwählenden (per Internet oder Email etc.) Telekommunikationsteilnehmers wird dessen Identität (die mit den Identitäten in der Potentielle-Teilnehmer-Liste verglichen werden soll) in für die Art des Anrufs bzw. Einwählens geeigneter Weise überprüft. Im Falle eines Anrufs aus einem Mobilfunknetz bei der Bonussystem-Neuteilnehmer-Erfassungseinheit kann eine mit dem Anruf signalisierte oder sonstige übertragene Identität (insbesondere IMSI, MSISDN etc.) oder eine zu Telekommunikationsteilnehmern, welche von außerhalb dieses Mobilfunknetzes (des Bonuserfassungssystems) anrufen, übertragene Signalisierung als Identität berücksichtigt werden. Bei Anruf aus einem Festnetz kann eine übertragene Clip-Telefonnummer des anrufenden Telekommunikationsteilnehmers als Identität verwendet werden, beispielsweise dessen ISDN-Nummer. Bei Übertragung über andere Telekommunikationsmedien können über dieses Telekommunikationsmedium übertragene Identitäten berücksichtigt werden. Bei "Anruf" des Teilnehmers in Form einer nonverbalen Textsequenz wie beispielsweise Email, kann z.B. seine Email-Absenderadresse etc. berücksichtigt werden. Möglichst ist beispielsweise auch ein Anruf eines Teilnehmers bei der Bonussystem-Neuteilnehmer-Annahme-Einheit in Form einer Mobilfunk-Kurznachricht (beispielsweise GSM-SMS-MO), welche beispielsweise in vorgegebener Form einen Text über den Wunsch des Teilnehmers zur Aufnahme in das Bonusbearbeitungssystem enthalten kann.

Die Identität des Teilnehmers kann zusätzlich zu einer über ein Telekommunikationsnetz übertragenen Identität (Telefonnummer etc.) auch ein Paßwort, wie beispielsweise eine PIN-Nummer des Teilnehmers, umfassen.

Insbesondere bei einem Mobiltelekommunikationsnetz ist es zweckmäßig, wenn hinsichtlich der Identität zusätzlich (zur IMSI, MSISDN + NDC etc. aus dem Netz) oder alternativ eine abgefragte Paßwort-Sequenz etc. des Telekommunikationsteilnehmers geprüft wird.

Nach dem erfolgreichen Aufnehmen eines Telekommunikationsteilnehmers (z.B. aus der Potentielle-Teilnehmer-Liste) in die Bonus-Teilnehmer-Liste kann diesem eine Code-Nummer vom Telekommunikationsnetz oder von der Bonussystem-Neuteilnehmer-Annahmeeinheit zugewiesen werden, welche bestimmte Aktionen, wie beispielsweise die Abfrage seines Bonus-Kontostandes, die Änderung seiner selbigen Code-Nummer oder seine Löschung aus der Bonus-Teilnehmer-Liste etc. erlaubt; diese Code-Nummer kann einem Telekommunikationsteilnehmer nach seiner Aufnahme in die Bonus-Liste per Kurznachricht (beispielsweise eine Point-to-Point MT-SMS von der Bonussystem-Neuteilnehmer-Annahmeeinheit zum selbigen Teilnehmer) oder in anderer Weise übermittelt werden.

Hinsichtlich der vorrichtungsmäßigen Realisierung des erfindungsgemäßen Verfahrens in einem Bonusbearbeitungssystem kann das Bonusbearbeitungssystem vollständig oder teilweise im Telekommunikationsnetz implementiert sein oder über das Telekommunikationsnetz (bei einem Dienstleister etc.) erreichbar sein. Insbesondere kann die Bonusbearbeitungssystem-Neuteilnehmer-Annahmeeinheit im Telekommunikationsnetz selbst (im HLR etc.) ganz oder teilweise implementiert sein oder beispielsweise über eine bestimmte Telefonnummer vom Telekommunikationsnetzes (und durch eine (Traffic Channel-) Vollverbindung und/oder Kurznachricht) erreichbar sein.

Weitere Merkmale und Vorteile ergeben sich aus den weiteren Unteransprüchen und der nachfolgenden Beschreibung eines Ausführungsbeispiels anhand der Figuren. Dabei zeigen:
- Figur 1: ein Beispiel einer Spracheingabe und -ausgabeeinheit einer Bonussystem- Neuteilnehmer-Annahmeeinheit hinsichtlich möglicher Funktionen in Form eines groben Ablaufdiagramms
- Figur 2: als Ablaufdiagramm die Identifikation von Teilnehmern der Bonusliste sowie die Überprüfung von in der Bonus-Teilnehmerliste noch nicht enthaltenden Telekommunikationsteilnehmern,
- Figur 3: als Flußdiagramm Details zu den in Figur 2 ausgewiesenen Unterprogrammen 1, 2, 3,
- Figur 4: ein Detail zum in Figur 2 ausgewiesenen Unterprogramm 4.
- Figur 5: Elemente eines Bonusbearbeitungssystems eines Mobilfunknetzes

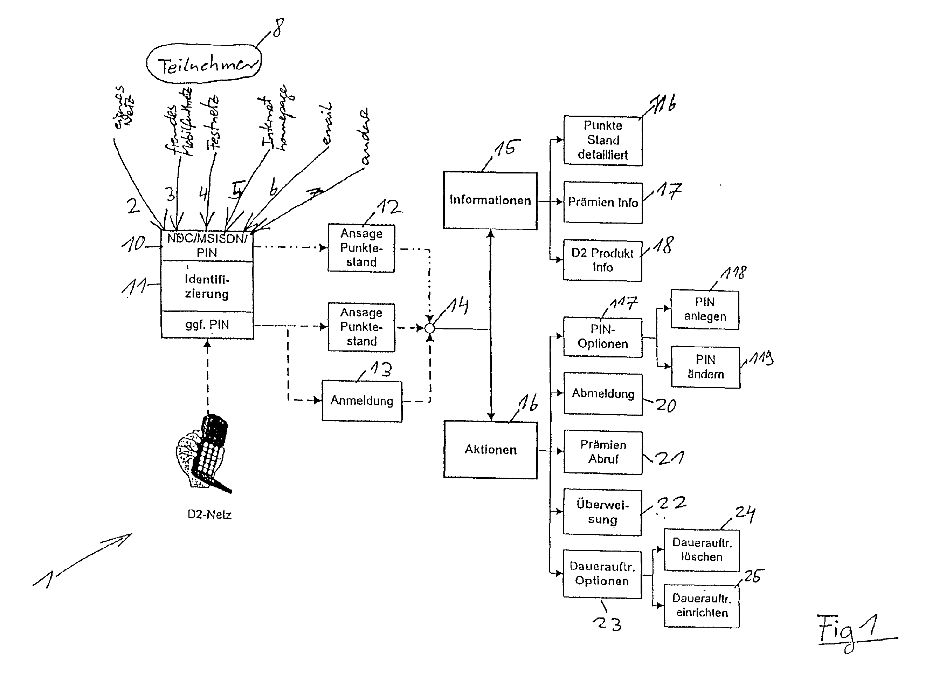

Figur 1 zeigt ein erfindungsgemäßes Bonussystem 1 umfassend eine Bonussystem-Neuteilnehmer-Annahmeeinheit, welches aus dem Telekommunikationsnetz (hier Mobilfunknetz) 2, (für welches es realisiert ist) ebenso wie aus einem anderen Mobilfunknetz 3 oder einem Festnetz 4 oder über eine Internethomepage 5 oder eine Email-Adresse 6 oder ein beliebiges anderes Telekommunikationsmedium 7 für einen Telekommunikationsteilnehmer 8 erreichbar ist.

Die Funktion 10 umfaßt die Überprüfung der Identität des bei der Bonusbearbeitungs-Neuteilnehmer-Annahmeeinheit anrufenden Teilnehmers 8, für den Vergleich in der Identifizierungseinheit 11 (= Neuteilnehmervergleichseinrichtung) und die Identitäten in einer Bonusteilnehmer-Liste. Die Identität kann dabei in netzseitig übertragenen Komponenten wie NDC, MS ISDN, PIN, ISDN etc. enthalten sein und/oder vom Teilnehmer 8 abzutragende zusätzliche Paßwörter enthalten (z.B. bei einem Anruf des Teilnehmer 8 aus einem Mobilfunknetz, insbesondere dem Telekommunikationsnetz, in welchem sich die Bonussystem-Neuteilnehmer-Annahmeeinheit befindet). Wenn sich der Anrufer 8 aufgrund seiner Identität als bereits in der Bonusteilnehmerliste gespeicherter Teilnehmer identifiziert hat, kann ihm beispielsweise sein Punktestand in einer gespeicherten Bonusliste des Bonusbearbeitungssystems angesagt werden. Falls er noch nicht in der Bonusteilnehmerliste gespeichert ist, kann er auch mit einer Anmelde-Einheit 13 verbunden werden. In Abhängigkeit von seiner weiteren Auswahl 14 kann er mit einer Informationseinheit 15 oder einer Aktionseinheit 16 verbunden werden.

Beispielsweise kann ihm sein Punktestand (116), Prämieninformation (17) oder weitere Produktinformationen des Telekommunikationsnetzbetreibers angegeben werden (18).

Falls er sich für die Aktionen 16 entscheidet, kann er auswählen ob er auf seine PIN-Nummer bezogene Aktionen wie Anlegen einer PIN-Nummer 118 oder Ändern seiner PIN-Nummer 119 wählen möchte, sich aus der Bonusteilnehmerliste abmelden möchte 20, einen Prämienabruf veranlassen möchte 21, seine Prämien oder Bonuseinträge zu einem anderen Teilnehmer oder einem anderen Bonussystem überweisen möchte 22 oder er für seine Bonuseinträge (= ihn betreffende Einträge in der Bonusliste) Daueraufträge zu anderen Teilnehmer oder Bonussystemen löschen möchte 24 oder einrichten möchte 25.

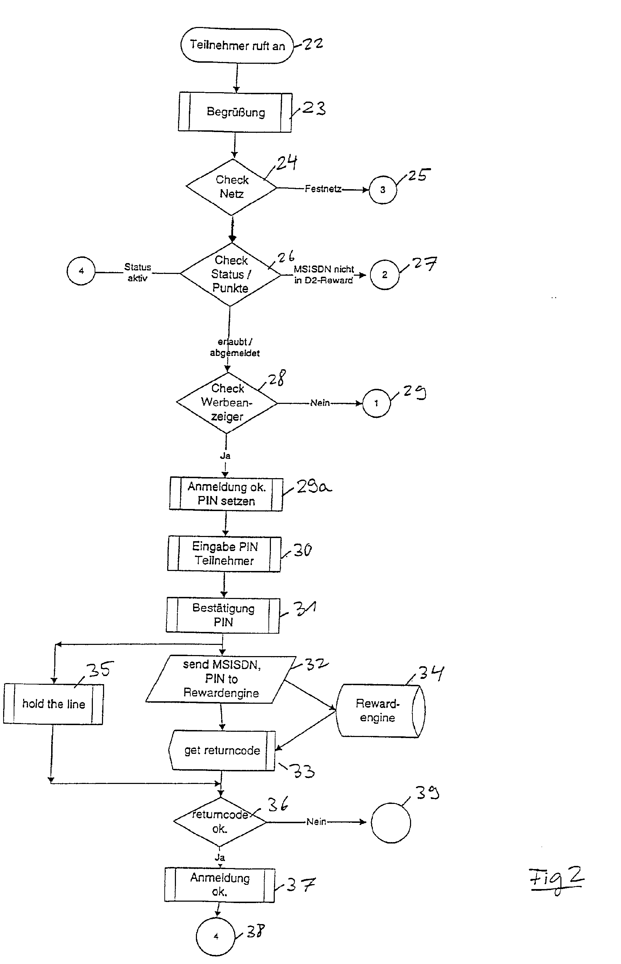

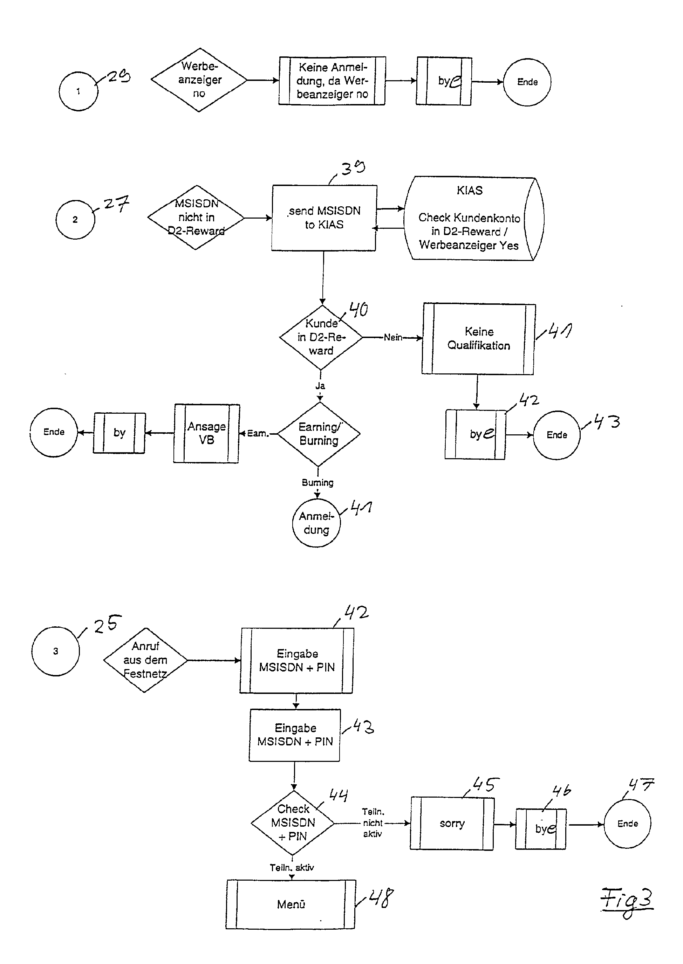

Figur 2 zeigt als Ablaufdiagramm Vorgänge bei der Einwahl eines Teilnehmers aus einem von mehreren unterschiedlichen Netzen sowie gegebenenfalls seinen Eintrag in die Bonusteilnehmerliste. Nach einem Anruf 22 eines Teilnehmers und einer eventuellen Begrüßung 23 wird überprüft 24 ("Check-Net"), aus welchem Netz er anruft. Falls er aus einem Festnetz anruft, wird mit dem Unterprogramm 25 (im Kreis mit der Nummer 3 bezeichnet) in Figur 3 unten fortgefahren.

Falls die Überprüfung des Netzes im Schritt 24 ergab, daß er aus dem selben Netz beispielsweise aus einem Mobilfunknetz anruft, in welchem das Bonusbearbeitungssystem angeordnet ist, wird im Schritt 25 eine Überprüfung veranlaßt, ob er in der Bonus-Teilnehmer-Liste des Bonusbearbeitungssystems bereits gespeichert ist. Falls im Schritt 26 ein Vergleich der Identität des anrufenden Teilnehmers mit Identitäten in der Bonusteilnehmer-Liste ergibt, daß der anrufende Teilnehmer noch nicht in der Bonus-Teilnehmer-Liste ist, wird im Schritt 27 mit dem Unterprogramm im Kreis 2 (im Detail dargestellt in Figur 3 Mitte) fortgefahren. Die Überprüfung der Identität im Schritt 26 kann beispielsweise bei einem Anruf aus einem Mobilfunknetz aufgrund der MSISDN des Anrufes erfolgen.

Wenn sich im Schritt 26 ergibt, daß der Bonusteilnehmer in der Bonus-Teilnehmer-Liste des Bonusbearbeitungssystems nicht enthalten ist, jedoch in einer Liste potentieller Teilnehmer (Potentielle-Teilnehmer-Liste) enthalten ist, also seine Anmeldung erlaubt ist, er jedoch noch nicht angemeldet ist, wird mit Schritt 28 fortgefahren. Im Schritt 28 wird überprüft, ob aktuell einem potentiellen Teilnehmer Werbung angezeigt werden soll und, falls dies im Telekommunikationsnetz erwünscht ist mit im Unterprogramm im Kreis 1 mit dem Bezugszeichen 29 (im Detail dargestellten Figur 2 oben) fortgefahren.

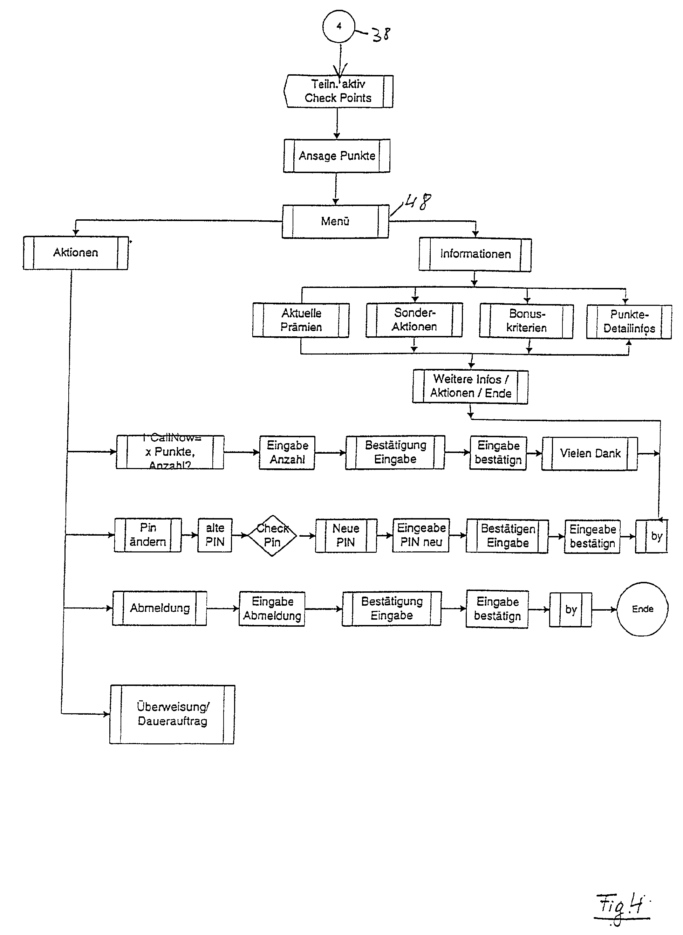

Nach einer eventuellen Einblendung von Werbemeldungen wird im Schritt 29a eine Code-Nummer (beispielsweise PIN) vom Teilnehmer abgefragt, worauf der Teilnehmer im Schritt 30 diese Code-Nummer (PIN etc.) eingibt und vom Mobilfunknetz im Schritt 31 diese PIN-Nummer dem Teilnehmer bestätigt wird. Mit dieser PIN-Nummer kann sich der Teilnehmer später aus der Bonus-Teilnehmer-Liste abmelden oder seinen Bonus-Einträge-Stand in der gespeicherten Bonusliste anfragen etc. Deshalb wird die Identität des Teilnehmers zusammen mit dieser Code-Nummer im Schritt 32 an einen Rewardengine gesendet. Im Schritt 33 wird von diesem Rewardengine 34 (welcher die Bonusliste-einträge erzeugt) die Übersendung der Identität und Code-Nummer 32 rückbestätigt. Während der Übermittlung der Identität und zugehörigen Code-Nummer an den Rewardengine 32, 33 wird die Verbindung des Teilnehmers zum Bonusteilnehmererfassungssystem gehalten (Bezugszeichen 35). Wenn der Rewardengine im Schritt 33 erfolgreich dem Bonusbearbeitungssystem die Übermittlung der Identität des Teilnehmer zusammen mit der Code-Nummer bestätigt hat, wird im Schritt 36 entschieden, daß die Anmeldung in Ordnung war und dies im Schritt 37 dem Mobilfunkteilnehmer mitgeteilt und im Unterprogramm 4 mit den Bezugszeichen 38 (dargestellt in Figur 4) fortgefahren. Falls kein Returncode (= Bestätigung) im Schritt 33 vom Rewardengine zurückkam, wird im Schritt 39 dem Teilnehmer eine Fehlermeldung übermittelt.

Figur 3 zeigt für das Unterprogramm (Bezugszeichen 29 in Figur 1) die Ansage von Werbetexten und für das Unterprogramm 27 in Figur 2 das Unterprogramm für den Fall, daß der Teilnehmer noch nicht in der Bonus-Teilnehmer-Liste enthalten ist. Falls eine Überprüfung im Schritt 26 in Figur ergibt, daß der Bonusteilnehmer noch nicht in der Bonus-Teilnehmer-Liste enthalten ist (aufgrund seiner Identität, beispielsweise MSISDN), wird im Schritt 39 seine Identität (beispielsweise MSISDN) hinsichtlich unterschiedlicher Einträge im KIAS des Telekommunikationsnetzes etc. dahingehend überprüft, ob er in einer für einen Eintrag in Bonus-Teilnehmer-Liste qualifizierenden Potentielle-Teilnehmer-Liste des Bonusbearbeitungssystems enthalten ist. Falls die Überprüfung im Schritt 40 ergibt , daß der Teilnehmer nicht in einer Potentielle-Teilnehmer-Liste enthalten ist, wird im Schritt 41 entschieden, daß er abgelehnt wird und im Schritt 42 ihm dies mitgeteilt und im Schritt 43 das Programm beendet.

Falls im Schritt 40 (in Figur 3) festgestellt wird, daß der anrufende Teilnehmer in der Potentielle-Teilnehmer-Liste gespeichert ist, wird im Schritt 41 der Teilnehmer in die Bonus-Teilnehmer-Liste eingetragen, also eine Anmeldung ausgeführt. Im Unterprogramm 3 (mit den Bezugszeichen 25 in Figur 2 wie auch in Figur 3) wird ein Anruf weiterbearbeitet, falls der Anrufer sich aus dem Festnetz meldet. In diesem Falle wird die MSISDN und PIN-Nummer im Schritt 42 angefragt und im Schritt 43 vom Teilnehmer (beispielsweise über ein Sprachein-/ausgabesystem, durch Tastendruck per DTMS etc.) eingegeben. Hierauf wird im Schritt 44 die Identität (beispielsweise umfassend MSISDN und PIN-Nummer) überprüft. Falls der Teilnehmer nicht aktiv ist, wird ihm dies im Schritt 45, 46 mitgeteilt und im Schritt 47 das Programm beendet oder mit Schritt 26 (Fig. 2) fortgefahren. Falls der Teilnehmer in der aktiven Teilnehmerliste (0 Bonusteilnehmerliste) ist, wird er mit einem Menü, beispielsweise gemäß Nr. 14 in Figur 1 im Schritt 48 verbunden.

Figur 4 zeigt Details einer möglichen Ausgestaltung eines Menüs, mit welchem in der Bonusliste gespeicherte Teilnehmer verbunden werden.

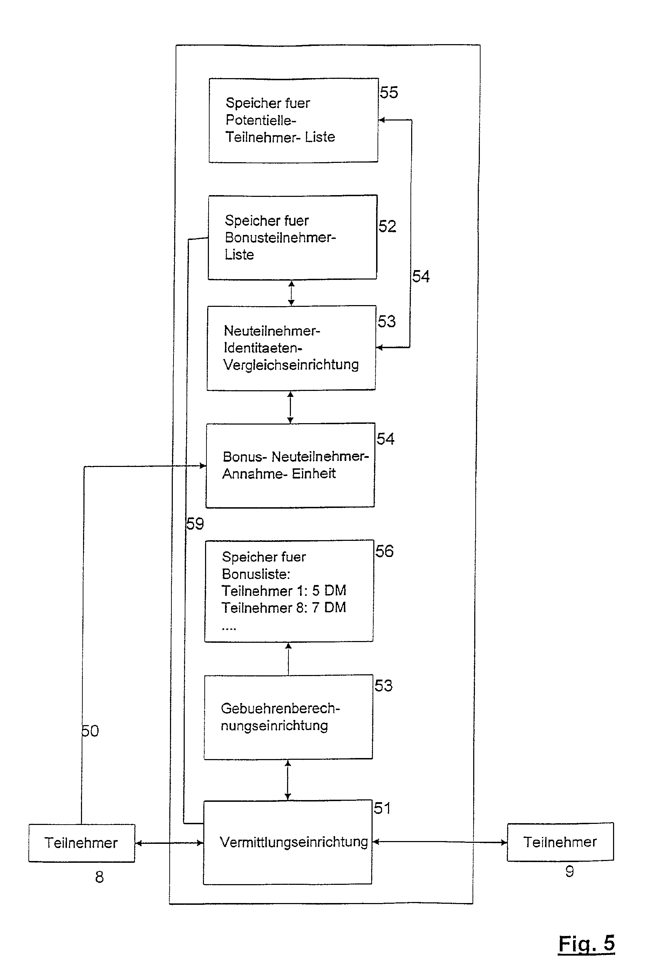

Figur 5 zeigt ein Beispiel eines Aufbaus von Elementen eines Bonusbearbeitungssystems. Der Teilnehmer 8 möchte für Anrufe (beispielsweise bei einem angerufenen Teilnehmer 9) über ein Telekommunikationsnetz Bonusse durch das Bonusbearbeitungssystem gutgeschrieben und gespeichert bekommen. Hierzu ruft zunächst (Schritt 50) der Teilnehmer 8 bei dem Bonusbearbeitungssystem an, nämlich bei einer Bonusneuteilnehmerannahmeeinheit 54. Die Neuteilnehmer-Identitäten- Vergleichseinrichtung 53 überprüft, ob der Teilnehmer bereits in einer im Speicher 52 gespeicherten Bonus-Teilnehmer-Liste gespeichert ist. Falls er dort bereits gespeichert ist, wird ihm gemäß dem Menü in Figur 4 etc. unter anderem eine Abfrage seiner Bonuspunkte, eine Änderung seiner Code-Nummer etc. ermöglicht. Falls der Teilnehmer 8 noch nicht im Speicher 52 gespeichert ist, überprüft die Neuteilnehmer- Identitäten- Vergleichseinrichtung im Schritt 54 ob der Teilnehmer in der im Speicher 55 gespeicherten Liste von potentiellen Teilnehmern, beispielsweise Teilnehmern des Telekommunikationsnetzes, gespeichert ist. Falls er dort gespeichert ist, sowie seine Identität korrekt abgefragt wurde, wird seine Identität im Speicher 52 in der Bonusteilnehmerliste abgespeichert und er kann ab sofort für Telekommunikationsverbindungen (von 8 zu 9 etc) über das Telekommunikationsnetz Bonus- Einträge in den Speicher 56 gespeichert bekommen.

Für einen Anruf des Bonus- Teilnehmers 8 beim angerufenen Teilnehmer 9 wird dann jeweils nach Überprüfung 59 seiner Identität im Speicher 52 für Bonusteilnehmer in einer Bonusliste 56 ein Bonus für den Teilnehmer 8 abgespeichert. Hierfür kann beispielsweise eine Anrufervergleichseinrichtung einmal in der Woche oder einmal am Tag etc. für sämtliche vom Telekommunikationsnetz festgestellten Anrufe eines Teilnehmers jeweils einen Bonus abspeichern.

## Patentansprüche

1. Verfahren zum Betreiben eines Bonusbearbeitungssystems eines Telekommunikationsnetzes für Teilnehmer des Telekommunikationsnetzes, insbesondere Mobilfunknetzes,
wobei bei einem Anruf oder Einwählen eines Teilnehmers bei einer Bonussystem-Neuteilnehmer-Annahmeeinheit des Bonussystems die Identität dieses Teilnehmers nach Überprüfung seiner Identität in einer Bonusteilnehmerliste des Bonusbearbeitungssystems gespeichert wird,
wobei zumindest für einen Anruf eines Telekommunikationsteilnehmers bei einem anderen Telekommunikationsteilnehmer über zumindest dieses Telekommunikationsnetz das Bonusbearbeitungssystem sofort oder später jeweils überprüft, ob dieser anrufende Telekommunikationsteilnehmer in der Bonus-Teilnehmer-Liste gespeichert ist und
wobei, falls er in der Bonusteilnehmerliste gespeichert ist, für seinen Anruf beim anderen Telekommunikationsteilnehmer ein Bonuseintrag in einer Bonusliste des Bonusbearbeitungssystems abgespeichert wird.

2. Verfahren nach Anspruch 1,
**dadurch gekennzeichnet,**
**daß** wenigstens einer der folgenden Verfahrensschritte durchgeführt wird:
- ein bei der Bonussystem-Neuteilnehmer-Annahme-Einheit des Bonussystems anrufender Teilnehmer wird nur dann in der Bonus-Teilnehmer-Liste des Bonusbearbeitungssystem gespeichert, falls zumindest ein Vergleich seiner Identität mit Identitäten in einer im Bonusbearbeitungssystem gespeicherten Potentielle-Teilnehmer-Liste dahingehend positiv verläuft, daß seine Identität in dieser Liste gespeichert ist,
- bei Anruf eines Telekommunikationsteilnehmers bei der Bonussystem-Neuteilnehmer-Erfassungseinheit wird von dieser dessen Identität, insbesondere seine beim Anruf signalisierte Identität, überprüft,
- es wird festgestellt, aus welchem Telekommunikationsnetz der Telekommunikationsteilnehmer anruft oder sich einwählt und seine Identität wird in Abhängigkeit hiervon geprüft,
- bei Anruf des Telekommunikationsteilnehmers aus einem seine Rufnummer übermittelnden Netz wird diese Rufnummer mit Rufnummern von für das Bonussystem zugelassenen potentiellen Teilnehmern in der Potentielle-Teilnehmer-Liste des Bonussystems verglichen und er wird nur bei positiven Vergleich in die Bonus-Teilnehmerliste des Bonusbearbeitungssystems eingetragen,
- die IMSI oder MSISDN oder ISDN des Anrufers beim Bonus-Neuteilnehmer-Erfassungssystem wird mit gespeicherten Einträgen in der Potentielle-Teilnehmer-Liste verglichen und bei einem positiven Vergleich der Teilnehmer in die Bonusteilnehmerliste des Bonussystems eingetragen,
- es wird eine Eingabe betreffend die Identität des Teilnehmers in ein Sprachdialogsystem des Bonusbearbeitungssystems in Form einer Spracheingabe oder endgerätseitigen DTMF-Tastatureingabe abgefragt,
- es wird vom Teilnehmer eine Code-Nummer über ein Sprachdialogsystem oder eine DTMF-Eingabeeinheit des Bonusbearbeitungssystems abgefragt und der Teilnehmer wird nur bei zutreffender Eingabe mit einem Menü verbunden.

3. Verfahren nach einem der vorhergehenden Ansprüche,
**dadurch gekennzeichnet,**
**daß** im Falle des Speicherns der Identität eines
Telekommunikationsteilnehmers in die Bonusteilnehmerliste des Bonusbearbeitungssystems für diesen eine Code-Nummer festgelegt wird, wobei diese Code-Nummer zu seinem Eintrag in der Bonusteilnehmerliste abgespeichert wird und die Sendung dieser Code-Nummer an ihn veranlaßt wird, wobei bei einem künftigen Anruf dieses Telekommunikationsteilnehmers beim Bonusbearbeitungssystem ihn betreffende Aktionen nur zugelassen werden, falls ein Vergleich der von ihm abgefragten Code-Nummer mit der für ihn gespeicherten Code-Nummer positiv verläuft.

4. Verfahren nach Anspruch 3,
**dadurch gekennzeichnet,**
**daß** eine mögliche Aktion wenigstens eine der folgenden möglichen Aktion ist:
- die Abfrage des Bonus-Kontostandes eines Teilnehmers in der Bonusliste, wobei die Ausgabe des abgefragten Kontostandes vorzugsweise über eine Sprachausgabe per Telefon oder über das Internet oder als Kurznachricht (MT-SMS) erfolgt,
- die Änderung der Code-Nummer,
- die Löschung dieses Teilnehmers aus der Bonusteilnehmerliste.

5. Verfahren nach einem der vorhergehenden Ansprüche,
**dadurch gekennzeichnet,**
**daß** ein Bonuseintrag in die Bonusliste bei Anruf eines Telekommunikationsteilnehmers bei einem anderen Telekommunikationsteilnehmer nur gespeichert wird, falls der Anruf gebührenpflichtig war.

6. Verfahren nach einem der vorhergehenden Ansprüche,
**dadurch gekennzeichnet,**
**daß** ein Bonuseintrag bei Anruf eines Telekommunikationsteilnehmers bei einem anderen Telekommunikationsteilnehmer nur erfolgt, falls die Gebühr für den Anruf über einem vorgegebenen Schwellwert liegt.

7. Verfahren nach einem der vorhergehenden Ansprüche,
**dadurch gekennzeichnet,**
**daß** auch für von einem anderen Bonusbearbeitungssystem, insbesondere einem Bonusbearbeitungssystem eines anderen Telekommunikationsnetzes, über eine Schnittstelle an das erfindungsgemäße Bonuserfassungssystem übermittelte zu speichernde Bonuseinträge für Bonusteilnehmer abgespeichert werden.

8. Verfahren nach einem der vorhergehenden Ansprüche,
**dadurch gekennzeichnet,**
**daß** von einem Dritten auch Prämien für Bonuspunkte des erfindungsgemäßen Bonuserfassungssystems über eine Schnittstelle abrufbar sind.

9. Verfahren nach einem der vorhergehenden Ansprüche,
**dadurch gekennzeichnet,**
**daß** für einen Teilnehmer in einer Bonusliste gespeicherte Bonuseinträge (= Bonuspunkte) von ihm an einen anderen Teilnehmer überwiesen werden können, indem der überwiesene Teil der Bonuseinträge beim überweisenden Teilnehmer abgezogen und beim empfangenden Teilnehmer addiert wird.

10. Verfahren nach einem der vorhergehenden Ansprüche,
**dadurch gekennzeichnet,**
**daß** nach Ablauf einer vorgegebenen Zeit, insbesondere einer in Abhängigkeit vom Grund der Entstehung eines Bonuseintrags vorgegebenen Zeit, der Bonuseintrag automatisch gelöscht wird, falls er bis dahin nicht als Prämie abgerufen wurde.

11. Verfahren nach einem der vorhergehenden Ansprüche,
**dadurch gekennzeichnet,**
**daß** bei Überschreitung einer für eine Prämie vorgegebenen Schwellwert-Gesamthöhe der Bonuseinträge, insbesondere Bonuspunkte für den Abruf der Prämie durch den Teilnehmer, eine der Schwellwert-Gesamthöhe entsprechende Bonuseintrags-Löschung für den Teilnehmer erfolgt.

12. Bonusbearbeitungssystem für ein Telekommunikationsnetz, insbesondere Mobilfunknetz,
mit einem Speicher für eine Bonus-Teilnehmer-Liste von Identitäten von zum Bonusbearbeitungssystem zugelassenen Teilnehmern,
mit einem Speicher für eine Bonusliste für zu speichernde Bonuseinträge der zugelassenen Teilnehmer in der Bonusteilnehmerliste,
mit einer Bonusbearbeitungssystem-Neuteilnehmer-Annahmeeinheit des Bonusbearbeitungssystems, welche so ausgebildet ist, daß bei einem bei der Bonusbearbeitungssystem-Neuteilnehmer-Annahmeeinheit eingehenden Anruf eines Telekommunikationsteilnehmers dieser in der Bonusteilnehmerliste gespeichert wird,
mit einer Anrufer-Vergleichseinrichtung, welche so ausgebildet ist, daß für einen Anruf eines Telekommunikationsteilnehmers bei einem anderen Telekommunikationsteilnehmer nur ein Bonuseintrag in der Bonusliste gespeichert wird, falls ein Vergleich der Identität des anrufenden Telekommunikationsteilnehmers mit einer der Identitäten in der Bonus-Teilnehmer-Liste positiv ist.

13. Bonusbearbeitungssystem nach Anspruch 12,
**dadurch gekennzeichnet,**
**daß** im Bonusbearbeitungssystem wenigstens eine der folgenden Einheiten vorgesehen ist:
eine Bonuserzeugungseinheit, die bei der Freischaltung eines Service oder einer Mindestdauer einer Kundenbeziehung des Teilnehmers für diesen einen Bonuseintrag in der Bonusliste speichert,
ein Speicher für eine Potentielle-Teilnehmer-Liste von Identitäten zum Bonuserfassung potentiell zulaßbarer Telekommunikationsteilnehmer, wobei die Neuteilnehmervergleichseinrichtung so ausgebildet ist, daß bei einem bei der Bonusbearbeitungssystem-Neuteilnehmer-Annahmeeinheit eingehenden Anruf eines Telekommunikationsteilnehmers dieser in der Bonusteilnehmerliste gespeichert wird, falls ein Vergleich seiner Identität mit einer der Identitäten in der Potentielle-Teilnehmer-Liste positiv ist.
eine Code-Nummer-Vergabeeinrichtung, die so ausgebildet ist, daß bei einem Neueintrag eines Telekommunikationsteilnehmers in die Bonusteilnehmerliste diesem Teilnehmer eine Code-Nummer zugewiesen und übermittelt wird, wobei das Bonusbearbeitungssystem so ausgebildet ist, daß eine erneute Einwahl des Telekommunikationsteilnehmers dort für eine Änderung einer Code-Nummer, eine Bonusabfrage oder eine Löschung des Teilnehmers aus der Bonusteilnehmerliste nur bei zutreffender Eingabe dieser Code-Nummer zugelassen wird.
- eine Spracheingabeeinheit, über welche die Identität eines dort anrufenden Telekommunikationsteilnehmers und/oder Menüauswahleingaben abfragbar sind,
- eine DTMF-Eingabeeinheit für die DTMF-Eingaben eines Teilnehmers in das Bonusbearbeitungssystem betreffend seine Identität oder Menüauswahleingaben vorgesehen ist.

14. Bonusbearbeitungssystem nach Anspruche 12 oder 13,
**dadurch gekennzeichnet,**
**daß** die Anrufvergleichseinrichtung so ausgebildet ist, daß sie innerhalb vorgegebener Intervalle für alle Anrufe jeweils eines Telekommunikationsteilnehmers Bonuseinträge in der Bonusliste generiert und speichert, falls der Telekommunikationsteilnehmer in der Bonusteilnehmerliste gespeichert ist.

15. Bonusbearbeitungssystem nach einem der Ansprüche 12 bis 14,
**dadurch gekennzeichnet,**
**daß** es eine Schnittstelle zu einem anderen Bonuserfassungssystem, insbesondere einem Bonuserfassungssystem eines anderen Telekommunikationsnetzes, aufweist, über welche Schnittstelle Bonuseinträge und/oder Überweisungen und/oder Abfragen und/oder Prämien übermittelbar sind.
